# EUROPÄISCHE PATENTANMELDUNG

(11) **EP 4 289 533 A1**
(43) Veröffentlichungstag der Anmeldung: **13.12.2023**
(21) Anmeldenummer: 22177441.7
(22) Anmeldetag: 07.06.2022
(51) Int. Cl.: B23B 35/00, B23B 47/00, B28D 7/00, B23Q 15/08, B23Q 15/12, G05B 19/416

(54) **VERFAHREN ZUM BETRIEB EINER WERKZEUGMASCHINE UND WERKZEUGMASCHINE**

(71) Anmelder: Hilti Aktiengesellschaft, 9494 Schaan (LI)
(72) Erfinder: Schaefer, Martin, 6858 Schwarzach (AT)
(74) Vertreter: Hilti Aktiengesellschaft Corporate Intellectual Property

(57) **Zusammenfassung**

Die vorliegende Erfindung betrifft ein Verfahren zum Betrieb einer Werkzeugmaschine (10), wobei die Werkzeugmaschine zunächst mit einer ersten Kombination von Betriebsparametern betrieben wird, so dass ein erster Arbeitsfortschritt erhalten wird. Während des Betriebs der Werkzeugmaschine mit der ersten Kombination von Betriebsparametern kann dieser erste Arbeitsfortschritt ermittelt und mit einem zweiten Arbeitsfortschritt verglichen werden, der erhalten wird, wenn die Werkzeugmaschine mit einer zweiten Kombination von Betriebsparametern betrieben wird. Je nach Ergebnis des Vergleiches kann die Werkzeugmaschine mit der zweiten Kombination von Betriebsparametern weiterbetrieben werden oder die Werkzeugmaschine kann in den Betrieb mit der ersten Kombination von Betriebsparametern zurückkehren. Dieser Vergleich der Arbeitsfortschritte kann so lange wiederholt werden, bis ein maximaler, d.h. optimaler Arbeitsfortschritt erreicht bzw. gefunden wird. In einem weiteren Aspekt betrifft die Erfindung eine Werkzeugmaschine (10), wobei die Werkzeugmaschine vorzugsweise als Bohrgerät, bevorzugt als Kernbohrgerät, ausgebildet ist.

## Beschreibung

Die vorliegende Erfindung betrifft ein Verfahren zum Betrieb einer Werkzeugmaschine, wobei die Werkzeugmaschine zunächst mit einer ersten Kombination von Betriebsparametern betrieben wird, so dass ein erster Arbeitsfortschritt erhalten wird. Während des Betriebs der Werkzeugmaschine mit der einer ersten Kombination von Betriebsparametern kann dieser erste Arbeitsfortschritt ermittelt und mit einem zweiten Arbeitsfortschritt verglichen werden, der erhalten wird, wenn die Werkzeugmaschine mit einer zweiten Kombination von Betriebsparametern betrieben wird. Je nach Ergebnis des Vergleiches kann die Werkzeugmaschine mit der zweiten Kombination von Betriebsparametern weiterbetrieben werden oder die Werkzeugmaschine kann in den Betrieb mit der ersten Kombination von Betriebsparametern zurückkehren. Dieser Vergleich der Arbeitsfortschritte kann so lange wiederholt werden, bis ein maximaler, d.h. optimaler Arbeitsfortschritt erreicht bzw. gefunden wird. In einem weiteren Aspekt betrifft die Erfindung eine Werkzeugmaschine, wobei die Werkzeugmaschine vorzugsweise als Bohrgerät, bevorzugt als Kernbohrgerät, ausgebildet ist. Die Werkzeugmaschine kann mit einer Zubehörvorrichtung, wie einer Vorschubvorrichtung, verbunden werden, wobei die Zubehörvorrichtung dazu eingerichtet ist, den Arbeitsfortschritt der Werkzeugmaschine zu ermitteln.

### Hintergrund der Erfindung:

Im Stand der Technik sind Werkzeugmaschinen bekannt, mit denen Arbeiten - beispielsweise auf einer Baustelle oder im Heimwerkerbereich - durchgeführt werden können. Werkzeugmaschinen können Schneide- oder Trenngeräte, Winkel- oder Trennschleifer, Kernbohrgeräte, Bohrhämmer oder Bohrmeißel sein, ohne darauf beschränkt zu sein. Die Werkzeugmaschinen umfassen üblicherweise Werkzeuge, bei denen es sich um scheibenförmige, rotierende Werkzeuge handeln kann, wie Trenn- oder Schleifscheiben, oder um schlagende oder meißelnde Werkzeuge. Darüber hinaus sind im Stand der Technik Werkzeugmaschine bekannt, mit denen im Wesentlichen zylinderförmige Bohrkerne aus einem Untergrund herausgeschnitten werden können. Bei diesen Werkzeugmaschinen kann es sich um Bohrgeräte bzw. Kernbohrgeräte handeln. Kembohrgeräte weisen z.B. Bohrkronen als Werkzeuge auf, die von dem Kernbohrgerät zu einer Drehbewegung angetrieben werden können.

Die Werkzeuge der Werkzeugmaschinen, die aus dem Stand der Technik bekannt sind, werden zumeist über einen Elektromotor im Inneren der Werkzeugmaschine angetrieben. Der Motor dreht sich, wobei die Drehung des Motors in eine Drehung des Werkzeugs oder eine Schlag- oder Meißelbewegung des Werkzeugs umgesetzt wird. Zusätzlich können Werkzeugmaschinen mit einem Getriebe ausgerüstet sein, so dass die Werkzeugmaschine in verschiedenen Gängen betrieben werden kann. Viele der Werkzeugmaschinen können mit unterschiedlichen Werkzeugen betrieben werden. Beispielsweise können an einem Schleifgerät unterschiedliche Schleifscheiben befestigt werden, um unterschiedliche Aufgaben bzw. Anforderungen zu erfüllen. Kernbohrgeräte können beispielsweise mit Bohrkronen mit unterschiedlichen Durchmessern betrieben werden, um unterschiedlich große Bohrungen zu erstellen. Die Werkzeuge der Werkzeugmaschinen können sich beispielsweise im Feinheitsgrad, in der Größe, dem Durchmesser oder vielen anderen Eigenschaften unterscheiden. Bisher ist es im Stand der Technik so, dass die Werkzeugmaschinen zumeist mit einem oder mehreren Standard-Parametersätze von Drehzahl und Drehmoment betrieben werden. Die Umstellung von einem Parametersatz zu einem anderen Parametersatz erfolgt üblicherweise manuell durch den Anwender. Der Anwender stellt das verbindende Element dar, indem er, je nach Applikation, unterschiedliche Parametersätze einstellt. Dieser Umstand kann für einzelne Anwendungsfälle dazu führen, dass die durchzuführende Arbeit nicht optimal ausgeführt werden kann, weil die Arbeitsparameter, wie Drehzahl oder Drehmoment, nicht optimal auf das verwendete Werkzeug, die vorliegenden Werkzeugmaschinen, das verwendete Werkzeug oder den entsprechenden Anwendungsfall abstimmt sind.

Die Aufgabe, die der vorliegenden Erfindung zugrunde liegt, besteht darin, die vorstehend beschriebenen Nachteile des Standes der Technik zu überwinden und ein Verfahren zum Betrieb einer Werkzeugmaschine anzugeben, bei dem Arbeitsparameter, wie Drehzahl und Drehmoment, besser an unterschiedliche Werkzeuge, zu bearbeitende Untergründe oder Anwendungsfälle angepasst werden können. Es soll ferner eine Werkzeugmaschine bereitgestellt werden, mit der das vorzuschlagende Verfahren umgesetzt werden kann. Ein besonderes Anliegen der Erfindung besteht darin, eine verbesserte Anpassung des Betriebsverhaltens der Werkzeugmaschine für verschiedene Anwendungsfälle bereitzustellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Betrieb einer Werkzeugmaschine vorgesehen. Das Verfahren ist durch die folgenden Verfahrensschritte gekennzeichnet:
a) Betrieb der Werkzeugmaschine mit einer ersten Kombination von Betriebsparametern, wobei die erste Kombination von Betriebsparametern eine erste Drehzahl n1 und ein erstes Drehmoment M1 umfasst,
b) Ermittlung eines ersten Arbeitsfortschritts AF1 der Werkzeugmaschine bei Betrieb mit der ersten Kombination von Betriebsparametern,
c) Einstellung einer zweiten Kombination von Betriebsparametern, wobei die zweite Kombination von Betriebsparametern eine zweite Drehzahl n2 und ein zweites Drehmoment M2 umfasst,
d) Ermittlung eines zweiten Arbeitsfortschritts AF2 der Werkzeugmaschine bei Betrieb mit der zweiten Kombination von Betriebsparametern,
e) Vergleich des ersten Arbeitsfortschritts AF1 mit dem zweiten Arbeitsfortschritt AF2, wobei
   - Fortsetzung des Betriebs der Werkzeugmaschine mit der ersten Kombination von Betriebsparametem, wenn der erste Arbeitsfortschritt AF1 größer ist als der zweite Arbeitsfortschritt AF2, und
   - Fortsetzung des Betriebs der Werkzeugmaschine mit der zweiten Kombination von Betriebsparametem, wenn der erste Arbeitsfortschritt AF1 kleiner ist als der zweite Arbeitsfortschritt AF2.

Mit der Erfindung kann eine Betriebsverfahren und eine Werkzeugmaschine bereitgestellt werden, mit denen der Nutzer bei der Arbeit mit der Werkzeugmaschine unterstützt und eine Anzahl von durch den Nutzer vorzunehmenden Einstellungen reduziert werden kann. Tests haben gezeigt, dass die Arbeit mit der Werkzeugmaschine für den Nutzer deutlich vereinfacht und gleichzeitig die Nutzung der Werkzeugmaschine verbessert werden kann. Dies insbesondere dadurch, dass der Betrieb der Werkzeugmaschine optimal auf das Werkzeug der Werkzeugmaschine und/oder einen zu bearbeitenden Untergrund angepasst werden kann. Es ist im Sinne der Erfindung bevorzugt, dass es sich bei der Werkzeugmaschine um ein Gerät mit elektronischen Gängen handelt, wobei das Gerät insbesondere als Kernbohrgerät ausgebildet sein kann. Vorzugsweise kann die Werkzeugmaschine mit einer Energieversorgungsvorrichtung verbunden werden, um eine Energieversorgung der Werkzeugmaschine sicherzustellen. Bei der Energieversorgungsvorrichtung kann es sich vorzugsweise um eine wiederaufladbare Batterie oder einen Akkumulator handeln.

Wenn die Werkzeugmaschine nach dem Betrieb mit dem zweiten Parametersatz in den Betrieb mit dem ersten Parametersatz zurückkehrt, weil der erste Arbeitsfortschritt AF1 größer ist als der zweite Arbeitsfortschritt AF2, kann das Verfahren anschließend insofern fortgeführt werden, dass - beispielsweise nach einer kurzen Zeitspanne - erneut der zweite Parametersatz eingestellt und der Vergleich der Arbeitsfortschritte wiederholt wird. Wenn zu diesem späteren Zeitpunkt der zweite Arbeitsfortschritt AF2 größer ist als der erste Arbeitsfortschritt 1, kann der Betrieb der Werkzeugmaschine anschließend mit dem zweiten Parametersatz, d.h, mit der zweiten Kombination von Betriebsparametern, fortgesetzt werden.

Wenn die Werkzeugmaschine nach dem Betrieb mit dem zweiten Parametersatz in diesem Betrieb fortgeführt wird, weil der erste Arbeitsfortschritt AF1 kleiner ist als der zweite Arbeitsfortschritt AF2, kann das Verfahren anschließend insofern fortgeführt werden, dass - beispielsweise nach einer kurzen Zeitspanne - ein dritter Parametersatz eingestellt wird. Es kann dann der Arbeitsfortschritt, der mit diesem dritten Parametersatz erreicht wird ("dritter Arbeitsfortschritt AF3"), mit dem zweiten Arbeitsfortschritt verglichen werden. Wenn der zweite Arbeitsfortschritt größer dem dritten Arbeitsfortschritt ist, kehrt die Werkzeugmaschine vorzugsweise in den Betrieb mit dem zweiten Parametersatz zurück. Wenn der zweite Arbeitsfortschritt kleiner als der dritte Arbeitsfortschritt ist, wird der Betrieb der Werkzeugmaschine mit dem dritten Parametersatz fortgeführt. Die Einstellung des dritten Parametersatzes wird im Sinne der Erfindung bevorzugt auch als "Einstellung einer dritten Kombination von Betriebsparametern" bezeichnet, wobei die dritte Kombination von Betriebsparametern zumindest eine dritte Drehzahl n3 und ein drittes Drehmoment M3 umfasst.

Es ist im Sinne der Erfindung bevorzugt, dass der Betrieb der Werkzeugmaschine mit der zweiten Kombination von Betriebsparametern fortgesetzt wird, wenn der erste Arbeitsfortschritt AF1 ähnlich groß wie der zweite Arbeitsfortschritt AF2 ist. Mit anderen Worten kann die Arbeit mit der Werkzeugmaschine mit dem zweiten oder aktuellen Parametersatz fortgeführt werden, wenn die Arbeitsfortschritte in einem ähnlichen Bereich liegen.

Vorzugsweise umfassten die Kombinationen von Betriebsparametem mindestens eine Drehzahl n und ein Drehmoment M. Neben diesen beiden Betriebsparametern kann eine Betriebsparameterkombination noch weitere, zusätzliche Betriebsparameter umfassen. Es ist im Sinne der Erfindung bevorzugt, dass die Kombinationen von Betriebsparametern je einen Satz von Betriebsparametern umfassen, wobei mindestens je eine Drehzahl n und ein Drehmoment M in dem Betriebsparameter-Satz enthalten ist. Vorzugsweise kann je ein Paar aus einem Drehmoment M und einer Drehzahl n einen Punkt in einer Drehzahl-Drehmoment-Auftragung darstellen, wobei die Menge der Punkte in dieser Drehzahl-Drehmoment-Auftragung eine Gerätekennlinie bildet. Die Punkte der Gerätekennlinie können im Sinne der Erfindung bevorzugt auch als Betriebspunkte der Werkzeugmaschine bezeichnet werden, wobei jeder Betriebspunkt durch ein Paar aus einem Drehmoment M und einer Drehzahl n bzw. durch eine Kombination von Betriebsparametern umfassend mindestens ein Drehmoment M und eine Drehzahl n festgelegt wird.

Es ist im Sinne der Erfindung bevorzugt, dass die Gerätekennlinie eine Relation zwischen der Drehzahl n und dem Drehmoment M der Werkzeugmaschine darstellt. Die Gerätekennlinie kann in einer Drehzahl-Drehmoment-Auftragung dargestellt werden, wobei das Drehmoment M auf der x-Achse und die Drehzahl n auf der y-Achse der entsprechenden Auftragung aufgetragen wird. Es ist im Sinne der Erfindung bevorzugt, dass die Drehzahl n die Drehzahl des Motors und/oder die Drehzahl des Werkzeugs der Werkzeugmaschine darstellt. Bei der Arbeit mit der Werkzeugmaschine bewegt sich der Nutzer bevorzugt dynamisch auf der Gerätekennlinie, wobei der aktuelle Arbeitspunkt durch eine Wertepaar n/M aus Drehzahl und Drehmoment auf der Gerätekennlinie angegeben wird. Es ist im Sinne der Erfindung bevorzugt, dass eine Gerätekennlinie eine Menge an Wertepaaren n/M aus Drehzahl und Drehmoment umfasst. Mit anderen Worten wird die Gerätekennlinie von einer Menge an Drehzahl-/Drehmoment-Wertepaaren gebildet, wobei jedem Arbeitspunkt der Werkzeugmaschine ein konkreter Drehzahlwert n und ein konkreter Drehmomentwert M zugeordnet werden kann.

Die Drehzahl kann beispielsweise in der Einheit rounds per minute (rpm) angegeben werden. Die Drehzahl entspricht vorzugsweise der Drehgeschwindigkeit des Motors bzw. der Motorwelle der Werkzeugmaschine. Mit dem Begriff «Drehzahl» kann auch die Drehzahl des Werkzeugs der Werkzeugmaschine beschreiben. Das Drehmoment M wird im Sinne der Erfindung vorzugsweise in der Einheit Newtonmeter (Nm) angegeben. Der Arbeitsfortschritt AF der Werkzeugmaschine kann vorzugsweise in einer in einer Arbeitsrichtung ermittelt werden. Das bedeutet im Sinne der Erfindung bevorzugt, dass ein Arbeitsfortschritt beispielsweise in eine Raumrichtung "nach vome" orientiert ist, wenn die Werkzeugmaschine horizontal gehalten wird, um beispielsweise eine Mauer oder eine Wand zu bearbeiten. Wenn ein Erdboden oder eine Bodenplatte mit der Werkzeugmaschine bearbeitet werden soll, kann die Werkzeugmaschine vorzugsweise vertikal gehalten oder an einem Bohrständer befestigt werden, so dass eine Arbeitsrichtung der Werkzeugmaschine in diesem Fall in eine Raumrichtung "nach unten" zeigt. Ein Richtungskreuz mit den Raumrichtungen ist in den Figuren abgebildet.

Es ist im Sinne der Erfindung bevorzugt, dass die Einstellung der zweiten Kombination von Betriebsparametern nach einer Zeitspanne ZS1 erfolgt. Diese Zeitspanne ZS1 kann beispielsweise vom Hersteller der Werkzeugmaschine in der Werkzeugmaschine hinterlegt oder voreingestellt sein. Dazu kann die Werkzeugmaschine eine Steuereinheit mit Speichervorrichtung umfassen. Es ist im Sinne der Erfindung ganz besonders bevorzugt, dass die Einstellung der zweiten oder weiteren Kombination von Betriebsparametern automatisch erfolgt. Das bedeutet im Sinne der Erfindung bevorzugt, dass die Einstellung nicht mehr manuell durch einen Nutzer erfolgen muss, sondern automatisch von der Werkzeugmaschine oder ihrer Steuervorrichtung vorgenommen wird. Durch die bevorzugt automatische Einstellung der Betriebsparametern kann vorteilhafterweise die Fehlerquelle "Mensch" umgangen werden und die Einstellung der Betriebsparameter kann auf Basis von erhobenen Daten erfolgen und dadurch objektiviert werden. Tests haben gezeigt, dass auf diese Weise die Anzahl von Fehleinstellungen von Betriebsparametern erheblich reduziert werden kann. Da die Arbeit mit der vorgeschlagenen Werkzeugmaschine bzw. mit dem vorgeschlagenen Verfahren auf einen raschen Arbeitsfortschritt fokussiert ist und den Arbeitsfortschritt der Werkzeugmaschine iterativ optimiert, kann mit der Erfindung insbesondere ein besonders schneller Arbeits- oder Bohrfortschritt erreicht werden.

Bei dem Vergleich des Arbeitsfortschritte miteinander können im Wesentlichen zwei unterschiedliche Ergebnisse im Sinne einer Fallunterscheidung erhalten werden. Wenn der erste Arbeitsfortschritt AF1 größer ist wie der zweite Arbeitsfortschritt AF2, so wird der Betrieb der Werkzeugmaschine mit der ersten Kombination von Betriebsparametern fortgesetzt. Das bedeutet im Sinne der Erfindung bevorzugt, dass die Werkzeugmaschine mit einer ersten Drehzahl n1 und mit einem ersten Drehmoment M1 betrieben wird, wenn der erste Arbeitsfortschritt AF1 größer ist im Vergleich zum zweiten Arbeitsfortschritt AF2. Die Fortsetzung des Betriebs der Werkzeugmaschine mit der ersten Kombination von Betriebsparametern kann im Sinne der Erfindung bevorzugt auch als Rückkehr in den ursprünglich bzw. zu Anfang eingestellten Betrieb der Werkzeugmaschine bzw. Rückkehr zu der ursprünglich bzw. zu Anfang eingestellten Kombination von Betriebsparametern, d.h. insbesondere der ersten Kombination von Betriebsparametem bezeichnet werden. Die Fortsetzung des Betriebs der Werkzeugmaschine mit der ersten Kombination von Betriebsparametern bedeutet im Sinne der Erfindung bevorzugt, dass die Werkzeugmaschine mit der ursprünglich eingestellten, ersten Kombination von erster Drehzahl n1 und erstem Drehmoment M1 weiter betrieben wird, wenn der Arbeitsfortschritt mit der zweiten Kombination von zweiter Drehzahl n2 und zweitem Drehmoment M2 abnimmt, d.h. AF2 kleiner ist als AF1: AF2 < AF1.

Wenn der erste Arbeitsfortschritt AF1 kleiner ist als der zweite Arbeitsfortschritt AF2, kann der Betrieb der Werkzeugmaschine mit dem zweiten Satz von Betriebsparametern, d.h. mit der zweiten Kombination von Betriebsparametern fortgeführt werden. Die Fortsetzung des Betriebs der Werkzeugmaschine mit dem zweiten Parametersatz bedeutet im Sinne der Erfindung bevorzugt, dass die Werkzeugmaschine ihre aktuelle, d.h. zweite Drehzahl n2, sowie ihr aktuelles, d.h. zweites Drehmoment M2, beibehält, wenn der damit erhaltene Arbeitsfortschritt AF2 im Vergleich zum vorherigen Arbeitsfortschritt AF1 zunimmt. Ein zunehmender Arbeitsfortschritt bedeutet, dass AF2 größer ist als AF1: AF2 > AF1.

In einer Ausgestaltung der Erfindung ist es bevorzugt, dass das zweite Drehmoment M2 größer ist als das erste Drehmoment M1 (M2 > M1) und die zweite Drehzahl n2 kleiner ist als die erste Drehzahl n1 (n2 < n1) und/oder dass das dritte Drehmoment M3 größer ist als das zweite Drehmoment M2 (M3 > M2) und die dritte Drehzahl n3 kleiner ist als die zweite Drehzahl n2 (n3 < n2). In dieser Ausgestaltung der Erfindung ist es somit bevorzugt, dass die Kombination von Betriebsparametern von kleineren zu größeren Drehmomenten M verschoben wird, wenn der Arbeitsfortschritt der Werkzeugmaschine erhöht werden soll. Die Erhöhung der Drehmomente kann mit einer Reduzierung bzw. einem Absenken der Drehzahl n einhergehen, so dass in dieser Ausgestaltung der Erfindung maximale Arbeitsfortschritte bzw. ein optimaler Betrieb der Werkzeugmaschine mit vergleichsweise hohen Drehmomenten und geringen Drehzahlen erreicht wird.

In einer alternativen Ausgestaltung der Erfindung ist es bevorzugt, dass das zweite Drehmoment M2 kleiner ist als das erste Drehmoment M1 (M2 < M1) und die zweite Drehzahl n2 größer ist als die erste Drehzahl n1 (n2 > n1) und/oder dass das dritte Drehmoment M3 kleiner ist als das zweite Drehmoment M2 (M3 < M2) und die dritte Drehzahl n3 größer ist als die zweite Drehzahl n2 (n3 > n2). In dieser alternativen Ausgestaltung der Erfindung ist es somit bevorzugt, dass die Kombination von Betriebsparametern von größeren zu kleineren Drehmomenten M verschoben wird, wenn der Arbeitsfortschritt der Werkzeugmaschine erhöht werden soll. Das Absenken der Drehmomente kann mit einer Erhöhung der Drehzahl n einhergehen, so dass in dieser Ausgestaltung der Erfindung maximale Arbeitsfortschritte bzw. ein optimaler Betrieb der Werkzeugmaschine mit vergleichsweise geringen Drehmomenten und hohen Drehzahlen erreicht wird.

Diese Ausgestaltung der Erfindung kann beispielsweise dann Anwendung finden, wenn sich der Untergrund ändert. Wenn zum Beispiel die Werkzeugmaschine bzw. ihr Werkzeug auf ein Armierungs- oder Bewehrungseisen in Beton trifft, kann es wünschenswert sein, dass die Werkzeugmaschine in der Lage ist, ein höheres Drehmoment M bereitzustellen, um das Armierungseisen zu durchtrennen. Die Bearbeitung von reinem Beton erfolgt vorzugsweise mit einer hohen Drehzahl n der Bohrkrone und einem geringen Drehmoment M. Wenn die Werkzeugmaschine einen Armierungstreffer feststellt, ist es im Sinne der Erfindung bevorzugt, von einem aktuellen Parametersatz auf einen anderen Parametersatz, bei dem die Drehmoment M höher und die Drehzahlen n kleiner als bei dem aktuellen Parametersatz sind.

Darüber hinaus kann es bei fortschreitender Tiefe einer Bohrung wünschenswert sein, die Werkzeugmaschine mit einem höheren Drehmoment M zu betrieben, da aufgrund der Wandreibung höhere Kräfte erforderlich sein können, um einen Bohrfortschritt zu erzielen. Es ist im Sinne der Erfindung bevorzugt, dass bei geringen Bohrtiefen mit einem Parametersatz mit höheren Drehzahlen n und geringeren Drehmomenten M gearbeitet wird, während bei tieferen Bohrungen die Werkzeugmaschine mit niedrigeren Drehzahlen n und höheren Drehmomenten M betrieben wird.

Es ist im Sinne der Erfindung bevorzugt, dass die Werkzeugmaschine als Bohrgerät ausgebildet ist, vorzugsweise als Kernbohrgerät, so dass der Arbeitsfortschritt ein Bohrfortschritt ist und/oder ein Werkzeug der Werkzeugmaschine eine Bohrkrone ist. In dieser Ausgestaltung betrifft die Erfindung ein Verfahren zum Betrieb eines Bohrgeräts, insbesondere eines Kembohrgeräts, wobei das Verfahren durch folgende Verfahrensschritte gekennzeichnet ist:
a) Betrieb des Bohrgeräts mit einer ersten Kombination von Betriebsparametern, wobei die erste Kombination von Betriebsparametern eine erste Drehzahl n1 und ein erstes Drehmoment M1 umfasst,
b) Ermittlung eines ersten Bohrfortschritts AF1 des Bohrgeräts bei Betrieb mit der ersten Kombination von Betriebsparametern,
c) Einstellung einer zweiten Kombination von Betriebsparametern, wobei die zweite Kombination von Betriebsparametern eine zweite Drehzahl n2 und ein zweites Drehmoment M2 umfasst,
d) Ermittlung eines zweiten Bohrfortschritts AF2 des Bohrgeräts bei Betrieb mit der zweiten Kombination von Betriebsparametern,
e) Vergleich des ersten Bohrfortschritts AF1 mit dem zweiten Bohrfortschritt AF2, wobei
   - Fortsetzung des Betriebs des Bohrgeräts mit der ersten Kombination von Betriebsparametern, wenn der erste Bohrfortschritt AF1 größer ist als der zweite Bohrfortschritt AF2, und
   - Fortsetzung des Betriebs der Werkzeugmaschine mit der zweiten Kombination von Betriebsparametem, wenn der erste Bohrfortschritt AF1 kleiner ist als der zweite Bohrfortschritt AF2.

Der Verfahrensschritt e), d.h. der Vergleich der Arbeitsfortschritte miteinander, kann so lange wiederholt werden, bis eine Kombination von Betriebsparametern gefunden ist, bei der der Arbeitsfortschritt der Werkzeugmaschine maximal ist. Es kann im Sinne der Erfindung bevorzugt sein, dass dieser maximale bzw. optimale Arbeits- oder Bohrfortschritt je nach Material des zu bearbeitenden Untergrunds unterschiedlich ist. Beispielsweise kann unarmierter Beton mit einer Kombination aus einer vergleichsweise hohen Drehzahl und einem vergleichsweise geringen Drehmoment bearbeitet werden, während armierter Beton, insbesondere im Bereich der Armierung, idealerweise mit einem erhöhten Drehmoment bearbeitet wird, wobei ein höheres Drehmoment vorzugsweise mit einer geringeren Drehzahl verbunden ist.

Es ist im Sinne der Erfindung bevorzugt, dass der Betrieb des Bohrgeräts mit der zweiten Kombination von Betriebsparametem fortgesetzt wird, wenn der erste Bohrfortschritt AF1 ähnlich groß wie der zweite Bohrfortschritt AF2 ist. Mit anderen Worten kann die Arbeit mit der Werkzeugmaschine mit dem zweiten oder aktuellen Parametersatz fortgeführt werden, wenn die Bohrfortschritte in einem ähnlichen Bereich liegen.

Es ist im Sinne der Erfindung ganz besonders bevorzugt, dass der Verfahrensschritt e: "Vergleich der Arbeitsfortschritte" mit folgender Maßgabe wiederholt wird:
Vergleich des vorhergehenden Arbeitsfortschritts AF(i-1) mit dem aktuellen Arbeitsfortschritt AF(i), wobei
- Fortsetzung des Betriebs der Werkzeugmaschine mit der (i-1)-ten Kombination von Betriebsparametem, wenn der (i-1)-te Arbeitsfortschritt größer ist als der i-te Arbeitsfortschritt, und
- Fortsetzung des Betriebs der Werkzeugmaschine mit der i-ten Kombination von Betriebsparametem, wenn der (i-1)-te Arbeitsfortschritt kleiner ist als der i-te Arbeitsfortschritt.

Die Fortsetzung des Betriebs der Werkzeugmaschine mit der (i-1)-ten Kombination von Betriebsparametern entspricht im Sinne der Erfindung bevorzugt einer Rückkehr in den zuvor eingestellten Betrieb der Werkzeugmaschine bzw. Rückkehr zu der zuvor eingestellten Kombination von Betriebsparametern, d.h. insbesondere der (i-1)-ten Kombination von Betriebsparametern.

Es ist im Sinne der Erfindung bevorzugt, dass der Betrieb der Werkzeugmaschine mit der i-ten Kombination von Betriebsparametern fortgesetzt wird, wenn der (i-1)-te Arbeitsfortschritt AF1 ähnlich groß wie der i-te Arbeitsfortschritt AF2 ist. Mit anderen Worten kann die Arbeit mit der Werkzeugmaschine mit dem i-ten Parametersatz fortgeführt werden, wenn die Arbeitsfortschritte in einem ähnlichen Bereich liegen. Durch die auf diese Weise vorgenommene Wiederholung des Verfahrensschritts e: "Vergleich der Arbeitsfortschritte" kann vorteilhafterweise eine optimale Kombination von Betriebsparametern, insbesondere Drehmoment und Drehzahl, gefunden werden, bei der der Arbeitsfortschritt der Werkzeug- oder Bohrmaschine maximal ist. Durch das bevorzugt fortgesetzte Iterieren der Arbeitsfortschritt-Vergleiche während des gesamten Betriebs der Werkzeugmaschine kann vorteilhafterweise ein zu allen Zeiten auf die aktuellen Anwendungserfordernisse optimierter Betrieb der Werkzeugmaschine gewährleistet werden. Wenn sich beispielsweise der zu bearbeitende Untergrund verändert, kann die Werkzeugmaschine durch Anwendung des vorgeschlagenen Verfahrens unterschiedliche Sätze oder Kombinationen von Betriebsparametern, wie Drehmoment und Drehzahl, einstellen und durch einen Vergleich der jeweiligen Arbeitsfortschritte ermitteln, mit welcher Kombination von Betriebsparametern weitergearbeitet werden soll. Vorzugsweise kehrt die Werkzeugmaschine bei abnehmendem Arbeitsfortschritt zu einem früheren Satz von Betriebsparametern zurück, während die Werkzeugmaschine bei zunehmendem Arbeitsfortschritt einen neuen Satz von Betriebsparametern einstellt.

In einem weiteren Aspekt betrifft die Erfindung eine Werkzeugmaschine zur Durchführung des vorgeschlagenen Verfahrens zum Betrieb einer Werkzeugmaschine. Die für das Betriebsverfahren eingeführten Begriffe, Definitionen und technischen Vorteile gelten vorzugsweise für die Werkzeugmaschine analog. Die Werkzeugmaschine ist dadurch gekennzeichnet, dass die Werkzeugmaschine als Bohrgerät ausgebildet ist, vorzugsweise als Kembohrgerät, so dass der Arbeitsfortschritt ein Bohrfortschritt ist und/oder ein Werkzeug der Werkzeugmaschine eine Bohrkrone ist. Vorzugsweise kann die Werkzeugmaschine Sensoren zur Ermittlung des Arbeitsfortschritts erfasst. Dabei kann es sich vorzugsweise um interne und/oder um externe Sensoren handeln. Interne Sensoren sind im Sinne der Erfindung in der Werkzeugmaschine verbaut bzw. liegen in der Werkzeugmaschine integriert vor. Dabei kann es sich beispielsweise um Abstandssensoren oder Drehzahlgeber handeln. Die Abstandssensoren können vorzugsweise auf physikalischen Messprinzipien oder Strahlungsarten, wie Laser, Licht, d.h. elektromagnetische Strahlung mit sichtbaren Wellenlängen, oder Ultraschall beruhen. Bei den externen Sensoren kann es sich vorzugsweise um solche Sensoren handeln, die an der Werkzeugmaschine oder an Zubehörvorrichtungen für die Werkzeugmaschine, wie Bohrständer, Vorschubvorrichtung oder dergleichen, angebracht oder befestigt werden können. Externe Sensoren können beispielsweise mit einem Kabel oder kabellos mit der Werkzeugmaschine verbunden werden oder mit der Werkzeugmaschine kommunizieren. Bei den externen Sensoren kann es sich ebenfalls um Abstandssensoren, Drehzahlgeber, sowie Wegmessstreckensensoren handeln, ohne darauf beschränkt zu sein. Vorzugsweise sind die Sensoren jeweils dazu eingerichtet, in dem Sinne mit der Werkzeugmaschine zu kommunizieren oder Daten auszutauschen, dass Messwerte von den Sensoren an die Werkzeugmaschine übermittelt werden können. Dabei kann es sich vorzugsweise um Rohdaten oder bereits informationstechnologisch bearbeitete Daten handeln. Der Datenaustausch zwischen der Werkzeugmaschine und den Sensoren erfolgt vorzugsweise kabellos und/oder kabelgebunden.

Es kann im Sinne der Erfindung auch bevorzugt sein, dass die Werkzeugmaschine mit einer Zubehörvorrichtung verbindbar ist, wobei die Zubehörvorrichtung dazu eingerichtet ist, den Arbeitsfortschritt der Werkzeugmaschine zu ermitteln. Vorzugsweise kann die Zubehörvorrichtung eine Vorschubvorrichtung zur Erzeugung eines Vorschubs für die Werkzeugmaschine sein. Beispielsweise kann die Vorschubvorrichtung eine automatische Vorschubvorrichtung sein, mit der ein Vorschub für die Werkzeugmaschine erzeugt und auf die Werkzeugmaschine übertragen werden kann. In einem Ausführungsbeispiel der Erfindung kann die Vorschubvorrichtung einen Drehzahlgeber umfassen, der dazu eingerichtet ist, eine Drehzahl eines Motors bzw. Rotors der Vorschubvorrichtung zu ermitteln. Die Vorschubvorrichtung bzw. der Drehzahlgeber können darüber hinaus dazu eingerichtet sein, anhand der ermittelten Drehzahl einen Bohrvorschub pro Rotorumdrehung zu ermitteln und an die Werkzeugmaschine weiterzuleiten.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer beispielhaften Ausgestaltung einer Werkzeugmaschine
- Fig. 2: Ansicht einer beispielhaften Ausgestaltung einer Werkzeugmaschine, die an einem Bohrständer angebracht ist und mit einer Zubehörvorrichtung verbunden ist.

### Ausführungsbeispiel und Figurenbeschreibung:

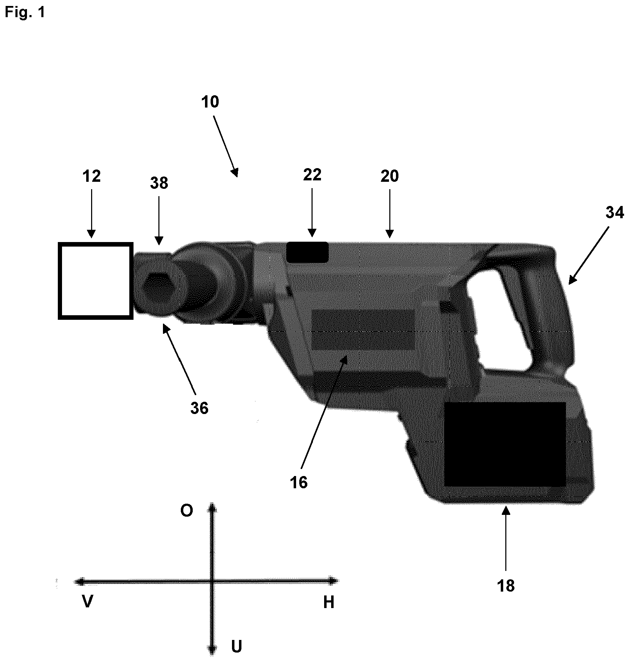

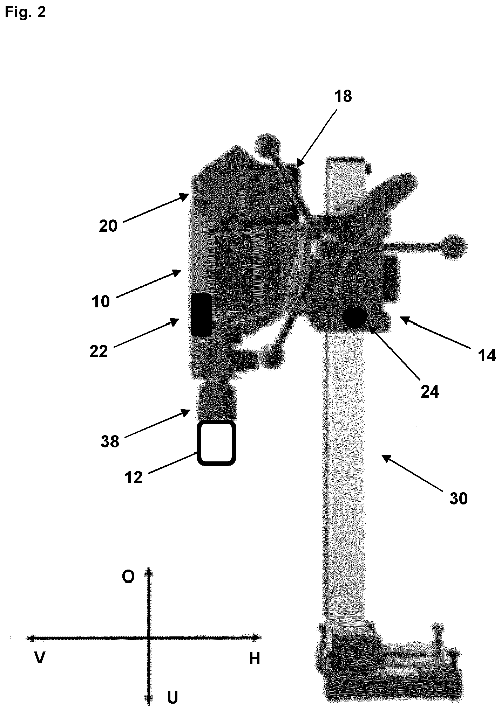

Figur 1 zeigt eine beispielhafte Ausgestaltung einer Werkzeugmaschine 10. Die Werkzeugmaschine 10 kann als Bohrgerät, insbesondere als Kernbohrgerät, ausgebildet sein und als Werkzeug 12 eine Bohrkrone aufweisen (schematisch dargestellt). Das Werkzeug 12 kann mit Hilfe einer Werkzeugaufnahme 38 an der Werkzeugmaschine 10 befestigt werden. Das Werkzeug 12 der Werkzeugmaschine 10 ist vorzugsweise dazu eingerichtet, eine Drehbewegung auszuführen, wobei das Werkzeug 12 von einem Motor 16 der Werkzeugmaschine 10 zu der Drehbewegung angetrieben werden kann. Die Energieversorgung der Werkzeugmaschine 10 kann über eine Energieversorgungsvorrichtung 18 erfolgen, die beispielsweise als wiederaufladbare Batterie ausgebildet sein kann. Die Werkzeugmaschine 10 kann verschiedene Handgriffe 34, 36 aufweisen, wobei die Werkzeugmaschine 10, die als Ausführungsbeispiel der Erfindung in Figur 1 abgebildet ist, einen hinteren Handgriff 34 aufweist, sowie einen vorderen Handgriff 36. Der vordere Handgriff 36 kann beispielsweise drehbar ausgebildet sein, so dass der vordere Handgriff 36 beispielsweise zur Seite abstehen oder sich in eine Raumrichtung «nach unten» erstrecken kann. Die Raumrichtungen «oben O», «unten U», «vorne V» und «hinten H» sind in den Figuren durch Richtungskreuze angegeben. Wenn die Werkzeugmaschine 10 - wie in Figur 1 - horizontal gehalten wird, um beispielsweise eine Bohrung in einer Mauer oder in einer Wand durchzuführen, entspricht die Arbeitsrichtung vorzugsweise der Raumrichtung «nach vorne V». Wenn die Werkzeugmaschine 10 - wie in Figur 2 dargestellt - an einem Bohrständer 30 angeordnet vorliegt und eine Bodenfläche oder einen Untergrund bearbeitet, so entspricht die Arbeitsrichtung der Werkzeugmaschine 10 vorzugsweise der Raumrichtung «nach unten U».

Die Werkzeugmaschine 10 kann ein Gehäuse 20 umfassen, das beispielsweise den Motor 16 und/oder die Energieversorgungsvorrichtung 18 der Werkzeugmaschine 10 umfasst. Das Gehäuse 20 kann ein- oder mehrteilig ausgebildet sein, wobei das in Figur 1 abgebildete Gehäuse 20 in dem Sinne zweiteilig ausgebildet ist, dass es ein Motorgehäuse und ein Batterie-Gehäuse umfasst, wobei das Motorgehäuse dazu eingerichtet ist, den Motor 16 der Werkzeugmaschine 16 aufzunehmen und wobei das Batterie-Gehäuse dazu eingerichtet ist, die Energieversorgungsvorrichtung 18 der Werkzeugmaschine 10 aufzunehmen.

Die Werkzeugmaschine 10 kann mindestens einen Sensor 22 aufweisen, der dazu eingerichtet ist, einen Arbeitsfortschritt der Werkzeugmaschine 10 zu erfassen. Der mindestens eine Sensor 22 kann an vielen verschiedenen Orten und Positionen der Werkzeugmaschine 10 angeordnet vorliegen.

Figur 2 zeigt eine beispielhafte Ausgestaltung einer Werkzeugmaschine 10, die an einem Bohrständer 30 angebracht ist und mit einer Zubehörvorrichtung 14 verbunden ist. Bei der Zubehörvorrichtung 14 kann es sich beispielsweise um eine Vorschubvorrichtung handeln, die dazu eingerichtet ist, einen Vorschub für die Werkzeugmaschine 10 zu erzeugen. Bei der in Figur 2 dargestellten Vorschubvorrichtung 14 handelt es sich um eine manuelle Vorschubvorrichtung 14, die ein Handrad umfasst. Es kann aber im Sinne der Erfindung auch bevorzugt sein, dass die Vorschubvorrichtung 14 eine automatische Vorschubvorrichtung 14 ist. Die Zubehörvorrichtung 14 ist vorzugsweise dazu in der Lage, einen Arbeitsfortschritt der Werkzeugmaschine 10 zu erfassen. Die Zubehörvorrichtung 14 kann dazu auch Sensoren 24 umfassen. Die in Fig. 2 dargestellte Position des Sensors 24 zur Erfassung eines Arbeitsfortschritts der Werkzeugmaschine 10 ist beispielhaft zu verstehen. Selbstverständlich kann der Sensor 24 auch an anderen Stellen der bevorzugt als Vorschubvorrichtung ausgebildeten Zubehörvorrichtung 14 angeordnet vorliegen.

### Bezugszeichenliste

- 10: Werkzeugmaschine
- 12: Werkzeug der Werkzeugmaschine
- 14: Zubehörvorrichtung der Werkzeugmaschine
- 16: Motor der Werkzeugmaschine
- 18: Energieversorgungsvorrichtung der Werkzeugmaschine
- 20: Gehäuse der Werkzeugmaschine
- 22: Sensor an der Werkzeugmaschine
- 24: Sensor an der Zubehörvorrichtung
- 30: Bohrständer
- 34: hinterer Handgriff
- 36: vorderer Handgriff
- 38: Werkzeugaufnahme
- V: Raumrichtung "nach vorne", Vorderseite
- H: Raumrichtung "nach hinten", Rückseite
- U: Raumrichtung "nach unten", Unterseite
- O: Raumrichtung "nach oben", Oberseite

## Patentansprüche

1. Verfahren zum Betrieb einer Werkzeugmaschine (10),
**umfassend die folgenden Verfahrensschritte:**
a) Betrieb der Werkzeugmaschine (10) mit einer ersten Kombination von Betriebsparametern, wobei die erste Kombination von Betriebsparametern eine erste Drehzahl n1 und ein erstes Drehmoment M1 umfasst,
b) Ermittlung eines ersten Arbeitsfortschritts AF1 der Werkzeugmaschine (10) bei Betrieb mit der ersten Kombination von Betriebsparametern,
c) Einstellung einer zweiten Kombination von Betriebsparametern, wobei die zweite Kombination von Betriebsparametern eine zweite Drehzahl n2 und ein zweites Drehmoment M2 umfasst,
d) Ermittlung eines zweiten Arbeitsfortschritts AF2 der Werkzeugmaschine (10) bei Betrieb mit der zweiten Kombination von Betriebsparametern,
e) Vergleich des ersten Arbeitsfortschritts AF1 mit dem zweiten Arbeitsfortschritt AF2, wobei
- Fortsetzung des Betriebs der Werkzeugmaschine (10) mit der ersten Kombination von Betriebsparametern, wenn der erste Arbeitsfortschritt AF1 größer ist als der zweite Arbeitsfortschritt AF2, und
- Fortsetzung des Betriebs der Werkzeugmaschine (10) mit der zweiten Kombination von Betriebsparametern, wenn der erste Arbeitsfortschritt AF1 kleiner ist als der zweite Arbeitsfortschritt AF2.

2. Verfahren nach Anspruch 1
**dadurch gekennzeichnet, dass**
das zweite Drehmoment M2 vorzugsweise größer ist als das erste Drehmoment M1 (M2 > M1) und die zweite Drehzahl n2 vorzugsweise kleiner ist als die erste Drehzahl n1 (n2 < n1).

3. Verfahren nach Anspruch 1
**dadurch gekennzeichnet, dass**
das zweite Drehmoment M2 vorzugsweise kleiner ist als das erste Drehmoment M1 (M2 < M1) und die zweite Drehzahl n2 vorzugsweise größer ist als die erste Drehzahl n1 (n2 > n1).

4. Verfahren nach einem der vorhergehenden Ansprüche
**dadurch gekennzeichnet, dass**
die Werkzeugmaschine (10) als Bohrgerät ausgebildet ist, vorzugsweise als Kernbohrgerät, so dass der Arbeitsfortschritt ein Bohrfortschritt ist und/oder ein Werkzeug (12) der Werkzeugmaschine (10) eine Bohrkrone ist.

5. Verfahren nach einem der vorhergehenden Ansprüche
**dadurch gekennzeichnet, dass**
der Verfahrensschritt e: "Vergleich der Arbeitsfortschritte" so lange wiederholt wird, bis eine Kombination von Betriebsparametern gefunden ist, bei der der Arbeitsfortschritt der Werkzeugmaschine (10) maximal ist.

6. Verfahren nach einem der vorhergehenden Ansprüche
**dadurch gekennzeichnet, dass**
der Verfahrensschritt e: "Vergleich der Arbeitsfortschritte" mit folgender Maßgabe wiederholt wird:
Vergleich des vorhergehenden Arbeitsfortschritts AF(i-1) mit dem aktuellen Arbeitsfortschritt AF(i), wobei
- Fortsetzung des Betriebs der Werkzeugmaschine (10) mit der (i-1)-ten Kombination von Betriebsparametern, wenn der (i-1)-te Arbeitsfortschritt größer ist als der i-te Arbeitsfortschritt, und
- Fortsetzung des Betriebs der Werkzeugmaschine (10) mit der (i)-ten Kombination von Betriebsparametern, wenn der (i-1)-te Arbeitsfortschritt kleiner ist als der i-te Arbeitsfortschritt.

7. Werkzeugmaschine (10) zur Durchführung des Verfahrens nach einem der vorhergehenden Ansprüche.

8. Werkzeugmaschine (10) nach Anspruch 7
**dadurch gekennzeichnet, dass**
die Werkzeugmaschine (10) als Bohrgerät ausgebildet ist, vorzugsweise als Kernbohrgerät, so dass der Arbeitsfortschritt ein Bohrfortschritt ist und/oder ein Werkzeug (12) der Werkzeugmaschine (10) eine Bohrkrone ist.

9. Werkzeugmaschine (10) nach Anspruch 7 oder 8
**dadurch gekennzeichnet, dass**
die Werkzeugmaschine (10) Sensoren (22) zur Ermittlung des Arbeitsfortschritts erfasst.

10. Werkzeugmaschine (10) nach einem der Ansprüche 7 bis 9
**dadurch gekennzeichnet, dass**
die Werkzeugmaschine (10) mit einer Zubehörvorrichtung (14) verbindbar ist, wobei die Zubehörvorrichtung dazu eingerichtet ist, den Arbeitsfortschritt der Werkzeugmaschine (10) zu ermitteln.

11. Werkzeugmaschine (10) nach Anspruch 10
**dadurch gekennzeichnet, dass**
die Zubehörvorrichtung (14) eine Vorschubvorrichtung zur Erzeugung eines Vorschubs für die Werkzeugmaschine (10) ist.
